(19) Europäisches Patentamt
European Patent Office
Office européen des brevets

(11) Numéro de publication : **0 073 701**
**B1**

# (12) FASCICULE DE BREVET EUROPÉEN

(45) Date de publication du fascicule du brevet : **02.01.86**

(51) Int. Cl.⁴ : **G 02 F 1/13**

(21) Numéro de dépôt : **82401464.1**

(22) Date de dépôt : **03.08.82**

(54) **Dispositif de visualisation à cristal liquide smectique.**

(30) Priorité : **21.08.81 FR 8116117**

(43) Date de publication de la demande : **09.03.83 Bulletin 83/10**

(45) Mention de la délivrance du brevet : **02.01.86 Bulletin 86/01**

(84) Etats contractants désignés : **DE GB IT NL SE**

(56) Documents cités :
**FR-A- 2 373 076**
**INTERNATIONAL ELECTRON DEVICES MEETING, 4-6 décembre 1978, Washington D.C., Institute of Electrical and Electronics Engineers, Technical Digest, pages 258-260, New York (USA); M. HARENG et al.: "Liquid crystal flat display".**
**APPLIED PHYSICS LETTERS, vol. 25, no. 12, 15 décembre 1974, American Institute of Physics, pages 683-685, New York (USA); M. HARENG et al.: "Electric field effects on biphenyl smectic A liquid crystals".**

(73) Titulaire : **THOMSON-CSF**
**173, Boulevard Haussmann**
**F-75379 Paris Cedex 08 (FR)**

(72) Inventeur : **Le Berre, Serge**
**THOMSON-CSF SCPI 173, bld Haussmann**
**F-75379 Paris Cedex (FR)**
Inventeur : **Hareng, Michel**
**THOMSON-CSF SCPI 173, bld Haussmann**
**F-75379 Paris Cedex (FR)**
Inventeur : **Beguin, Annie**
**THOMSON-CSF SCPI 173, bld Haussmann**
**F-75379 Paris Cedex (FR)**
Inventeur : **Thirant, Lydia**
**THOMSON-CSF SCPI 173, bld Haussmann**
**F-75379 Paris Cedex (FR)**

(74) Mandataire : **Wang, Pierre et al**
**THOMSON-CSF SCPI 173, Bld Haussmann**
**F-75379 Paris Cedex 08 (FR)**

**EP 0 073 701 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention concerne les cellules à cristal liquide, et plus particulièrement celles utilisant un cristal liquide en phase smectique à des fins d'affichage ou de reproduction d'images.

Les écrans à cristaux liquides sont des systèmes modulateurs de la lumière incidente à l'écran. Il peut s'agir d'écrans plats à vision directe ou d'écrans matriciels utilisés avec un système strioscopique pour la projection d'images enregistrées.

Les cristaux liquides sont formés de longues molécules orientables sous l'effet d'un champ électrique avec plus ou moins de facilité selon les conditions d'application du champ. On connaît des cristaux liquides qui présentent à température élevée une phase isotrope et à température plus basse une succession de phases nématique et smectique.

Dans le cas de dispositifs à cristaux liquides smectiques utilisant un effet mixte thermique et électrique, comme celui qui est décrit dans la demande de brevet français FR-A-2 373 076, l'inscription est réalisée par l'application d'un champ électrique lors du refroidissement du cristal liquide de la phase isotrope à la phase smectique et au cours de son passage dans la phase nématique. Un exemple typique de matériau utilisable pour cet effet est le cyano-octyl-4-4′-biphényl de formule :

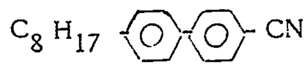

qui présente les transitions de phase suivantes :

$$K \xrightarrow{20\ °C} SA \xrightarrow{32,5\ °C} N \xrightarrow{40,5\ °C} I$$

On remarque que ce matériau possède une phase nématique s'étalant sur 8 °C. Si un écran de visualisation disposant d'un tel matériau est maintenu un peu en dessous de la température de transition smectique-nématique, il faudra lui fournir la puissance de chauffe nécessaire pour élever sa température d'une dizaine de degrés environ. Pour des questions de gains en puissance de commande, il est donc recommandé de réduire au maximum la phase nématique et même de la supprimer. On connaît des cristaux liquides, qui sont des mélanges de plusieurs matériaux smectiques, présentant en deçà d'un certain pourcentage de l'un de leurs constituants une phase nématique mais qui n'en présentent plus au-delà de ce pourcentage. De tels matériaux peuvent être utilisés dans des dispositifs à affichage par faisceau laser sans application de champ électrique. En effet, si l'on veut rester dans des valeurs de champ électrique supportables par la couche de cristal liquide, il importe que le champ soit appliqué pendant un temps suffisamment long pour qu'il agisse efficacement, ce qui n'est pas possible avec les matériaux connus jusqu'à présent et qui ne possèdent pas de phase nématique. La nécessité de disposer, dans les dispositifs à effet mixte thermique et électrique, de cristaux liquides smectiques possédant une phase nématique lors de la transition smectique-isotrope implique une puissance de chauffe importante.

Afin de pallier à ces inconvénients on propose d'utiliser un cristal liquide smectique qui, notamment par l'adjonction de dopants spécifiques ne possède plus de phase nématique, mais est quand même inscriptible par un effet mixte thermique et électrique. Contrairement à ce que l'on croyait, la suppression de la phase nématique n'a pas de conséquence graves. L'introduction de tels dopants dans un matériau smectique modifie les caractéristiques de fonctionnement et intervient sur la durée pendant laquelle le champ électrique peut être appliqué.

La présente invention concerne un dispositif de visualisation comprenant une couche de cristal liquide comprenant un mélange de biphényls du type présentant une phase smectique et une phase nématique, ladite couche étant soumise à un effet inscripteur mixte thermique et électrique par l'intermédiaire de moyens d'échauffement, permettant la transition de la phase smectique à la phase isotrope, et de moyens d'adressage par champ électrique, caractérisé en ce qu'au moins un dopant constitué par du bicyclooctène-2 est incorporé audit cristal liquide selon une proportion permettant la suppression de la phase nématique lors de la transition smectique-isotrope et permettant également l'adressage par champ électrique.

L'invention sera mieux comprise au moyen de la description ci-après et des figures annexées parmi lesquelles :

la figure 1 représente un dispositif de visualisation,

la figure 2 est un diagramme de phase,

la figure 3 est un diagramme donnant l'allure de la puissance de commande, de la tension vidéo et du contraste en fonction du pourcentage de dopants.

La figure 1 représente un dispositif de visualisation utilisant l'effet inscripteur mixte thermique et électrique. A titre d'exemple non limitatif, dans le dispositif choisi qui montre un écran à accès matriciel, l'effet thermique est provoqué par le passage d'un courant électrique dans des bandes chauffantes. L'écran de visualisation est formé de deux lames 2 et 3 supportant respectivement des réseaux de conducteurs 4 et 5 qui se croisent orthogonalement. Une couche de cristal liquide 1 est insérée entre les lames 2 et 3 dans un espace d'environ une dizaine de microns d'épaisseur défini par des cales d'épaisseur

non représentées. Dans cet exemple les électrodes 4 qui sont les connexions de colonnes de la matrice de visualisation sont également les bandes chauffantes de l'écran. Les électrodes 5 sont les connexions de lignes de cette matrice. Pour ne pas compliquer la figure, on n'a représenté que deux lignes et deux colonnes de l'écran. Le signal électrique incident représentatif des caractères ou de l'image à afficher est d'abord reçu par un circuit 6 qui sépare les signaux affectés aux lignes de ceux affectés aux colonnes. Les signaux permettant d'appliquer les champs électriques à chaque élément de l'écran défini par l'intersection d'une ligne et d'une colonne sont envoyés vers un circuit 9 de commande de ligne et possédant une mémoire tampon. Les signaux correspondant à la commande du courant de chauffage i qui traverse successivement chaque colonne sont dirigés vers le circuit 8. Une horloge 7 permet la coordination des signaux électriques de commande par son action sur les circuits 8 et 9 en fonction des opérations effectuées par le circuit séparateur 6.

Dans le cas d'une utilisation de l'écran en réflexion, on peut envisager la solution consistant à choisir les connexions de lignes 5 transparentes et les connexions de colonnes 4 réfléchissantes. Les électrodes 5 peuvent être réalisées par un mélange d'oxydes d'étain et d'indium. Les électrodes 4 peuvent être réalisées en aluminium. Les lames 2 et 3 peuvent être réalisées en verre, au moins la lame 3 étant transparente.

Dans le cas d'une utilisation de l'écran en transmission, les lames 2 et 3 sont transparentes et sont par exemple réalisées en verre. Les électrodes 4 et 5 sont également transparentes et peuvent être réalisées par un mélange d'oxydes d'étain et d'indium.

Il est connu de fabriquer des cristaux liquides smectiques n'ayant pas de phase nématique lors de la transition smectique isotrope. Cependant du fait du caractère incoercible de la phase smectique, l'orientation des molécules n'est pratiquement pas modifiée par un champ électrique appliqué à un tel matériau. Pour modifier l'orientation des molécules de ce matériau, il est admis que celui-ci doit posséder au moins une petite phase nématique pendant laquelle on applique le champ électrique d'orientation des molécules. Cette phase nématique amène une plus grande aptitude du matériau à réagir à un champ électrique qui lui est appliqué.

L'invention consiste notamment à introduire un ou plusieurs dopants dans un matériau smectique afin de le rendre apte à réagir à un champ électrique appliqué. La figure 2 est un diagramme de phase binaire d'un matériau smectique composé d'un mélange de biphényls qui sera appelé partie A :

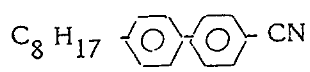

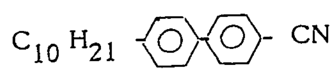

et qui présente les transitions de phase suivantes :

$$K \xrightarrow{13\,^{\circ}C} S_A \xrightarrow{43\,^{\circ}C} N \xrightarrow{45\,^{\circ}C} I$$

auquel on ajoute un dopant appelé partie B : le bicyclooctène-2.

On voit que le matériau possède une petite phase nématique qui s'étend sur 2 °C. L'introduction du dopant B a pour but de réduire encore plus l'amplitude de la phase nématique et à partir d'un certain taux de la supprimer complètement. Le diagramme de phase de la figure 2 montre les différentes transitions de phases d'un composé des matériaux A et B. L'abscisse de ce diagramme donne la concentration de 0 à 100 % de matériau B dans le mélange A + B. Les ordonnées du diagramme sont graduées en degrés Celsius. On voit que la phase nématique est présente jusqu'à une concentration du dopant d'environ 11 % dans le mélange. Un exemple type d'utilisation est un mélange des composés A et B qui comprend 15 % du produit B. Un tel mélange fond vers 9 °C, présente une phase smectique de 9 °C à 40 °C puis une phase isotrope.

La figure 2 donne un exemple de composé formé de 95 % de matériau A et de 5 % du dopant B. La succession des phases de ce composé est donnée par la droite en pointillés d'abscisse 5 %. Au point D le composé se trouve dans la phase isotrope où le champ électrique n'a pas d'effet. Lorsque la température du composé décroît, le composé passe en phase nématique où se situe le point E. C'est dans cette zone que selon l'art connu le champ électrique agit efficacement. La température décroissant toujours on passe en phase smectique, par exemple en F et le composé conserve l'état de diffusion qu'il a reçu lors de son passage par la phase nématique.

Par contre un composé comprenant 15 % de matériau B comme décrit plus haut présente dans la gamme de fonctionnement de l'écran deux phases : la phase isotrope représentée par exemple par le point D' et la phase smectique représentée par le point F'. Un tel composé s'est avéré apte à réagir efficacement à un champ électrique lors de la transition isotrope-smectique. L'explication physique des phénomènes inhérents à ces mélanges est assez compliquée, néanmoins on peut esquisser une explication concernant l'application du champ électrique d'orientation des molécules. Pour un cristal liquide smectique classique, le champ électrique n'a pas d'action en phase isotrope. Par contre il agit

efficacement en phase nématique lors du refroidissement du cristal liquide. Le champ électrique qui ne peut pas être trop élevé pour éviter le claquage de la couche de cristal liquide doit être appliqué pendant un certain temps pour agir efficacement. Dans les matériaux smectiques connus qui ne possèdent pas de phase nématique, le champ électrique n'avait pas le temps d'agir à la transition isotrope-smectique. L'adjonction de dopants appropriés permet d'augmenter le temps $\tau$ pendant lequel le champ électrique est susceptible d'être appliqué jusqu'à des valeurs normales d'utilisation. Ce temps $\tau$ est conditionné par la structure du cristal liquide et non pas par des moyens externes.

Un mélange comme celui décrit précédemment peut être utilisé avantageusement pour des pourcentages de matériau B compris par exemple entre 13 et 20 % dans des écrans à accès matriciel. La phase nématique qui était considérée comme indispensable dans les écrans à cristal liquide smectique utilisant l'effet mixte thermique et électrique a disparu. On a en effet constaté qu'il existe des matériaux dont l'orientation est possible sans qu'ils présentent une phase nématique, celle-ci étant notamment supprimée par l'adjonction de dopants spécifiques.

L'utilisation de composés smectiques selon l'invention, en raison de l'absence de phase nématique et/ou du fait de l'adjonction de dopants, apporte un certain nombre d'avantages qui sont l'augmentation du contraste, la diminution de la puissance de commande et la diminution de la tension vidéo.

A titre d'exemple non limitatif, on a relevé plusieurs paramètres représentatifs d'un composé selon l'invention. Pour illustrer les avantages qui viennent d'être relevés, on a indiqué sur la figure 3 l'allure de la puissance de commande, de la tension vidéo et du contraste en fonction du pourcentage de dopants que comprend le composé. La puissance de commande est exprimée en W/mm$^2$ et est représentée par la courbe 7. C'est la puissance nécessaire pour amener la couche de cristal liquide à la température requise pour l'inscription ou l'effacement de l'écran. La tension vidéo, représentée par la courbe 6, est la tension d'inscription ou d'effacement appliquée au cristal liquide par l'intermédiaire des deux réseaux d'électrodes. Le contraste exprime un rapport de brillance et est représenté par la courbe 8. Le fonctionnement idéal sera celui nécessitant une puissance de commande minimale, un contraste maximum pour une faible tension vidéo.

Le matériau étudié est un mélange de biphényls :

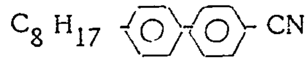

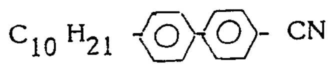

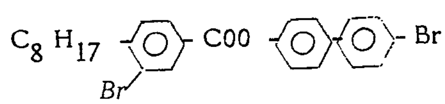

dont les transitions de phase sont :

$$K \xrightarrow{15\,°C} S_A \xrightarrow{53\,°C} N \xrightarrow{56\,°C} I$$

On procède à l'addition de bicyclooctène-2 dans des proportions pouvant être importantes (jusqu'à 15 %). Dans ces conditions, on peut comparer les résultats pour différentes concentrations du dopant. Pour une concentration de dopant de 2,5 %, la phase nématique s'étend environ sur 1 °C. Pour une concentration de dopant de 10 %, il n'y a plus de phase nématique.

L'examen des différentes courbes de la figure 3 révèle trois zones distinctes. Une première zone pour un mélange contenant de 0 à 2 % environ de dopant montre que la tension vidéo est faible, mais le contraste est également faible et la puissance de commande élevée. De 2 à environ 6 % de dopant dans le mélange la tension vidéo est élevée, le contraste est amélioré et la puissance de commande tend à diminuer. Pour une concentration de dopant de 9 ou 10 % le cristal liquide présente des avantages certains. En effet pour de faibles tensions vidéo et une faible puissance de commande, le contraste est très bon. Ceci est particulièrement intéressant pour les écrans à cristaux liquides smectiques. Il faut cependant remarquer que la courbe donnant la puissance de commande en fonction du pourcentage de dopant présente entre 6 et 9 % de dopant un maximum assez difficilement explicable. Il y a lieu d'éviter cette anomalie en se plaçant à droite de ce maximum. L'abaissement de la tension vidéo est un phénomène inattendu qui pourrait s'expliquer par une augmentation du temps $\tau$ pendant lequel le champ électrique est opérant.

L'augmentation du contraste en fonction du pourcentage de dopant pourrait s'expliquer par une analogie avec le phénomène de cristallisation à partir de germes. L'introduction de dopants appropriés à l'intérieur d'un cristal liquide smectique amènerait une multiplication des défauts à l'intérieur du matériau ce qui aurait pour conséquence de diminuer la taille des zones diffusantes et donc d'augmenter le contraste.

Le composé cristal liquide smectique selon l'invention est également utilisable dans les dispositifs à effet mixte thermique et électrique dans lesquels l'effet thermique est assuré par l'impact d'un faisceau

laser sur ladite couche, le champ électrique étant appliqué entre deux électrodes enserrant ladite couche. L'utilisation d'un cristal liquide smectique dépourvu de phase nématique selon l'invention et présentant les caractéristiques décrites plus haut est particulièrement avantageux dans les écrans de visualisation à accès matriciel. Le gain en tension vidéo est d'environ trois, ce qui permet de commander l'écran par des circuits à transistors fonctionnant avec des valeurs de tensions courantes.

**Revendications**

1. Dispositif de visualisation comprenant une couche (1) de cristal liquide comprenant un mélange de biphényls du type présentant une phase smectique et une phase nématique, ladite couche étant soumise à un effet inscripteur mixte thermique et électrique par l'intermédiaire de moyens d'échauffement, permettant la transition de la phase smectique à la phase isotrope, et de moyens d'adressage par champ électrique, caractérisé en ce qu'au moins un dopant constitué par du bicyclooctène-2 est incorporé audit cristal liquide (1) selon une proportion permettant la suppression de la phase nématique lors de la transition smectique-isotrope et permettant également l'adressage par champ électrique.

2. Dispositif de visualisation selon la revendication 1, dans lequel les moyens d'échauffement sont constitués de bandes chauffantes (4) successivement traversées par un courant de chauffage et que les moyens d'adressage par champ électrique sont constitués d'une part par les bandes chauffantes (4) et d'autre part par un réseau d'électrodes (5), la couche de cristal liquide (1) étant comprise entre lesdites bandes et lesdites électrodes.

3. Dispositif de visualisation selon la revendication 1, dans lequel les moyens d'échauffement sont constitués par un faisceau laser explorant ladite couche et que les moyens d'adressage par champ électrique sont formés de deux électrodes enserrant ladite couche.

4. Dispositif de visualisation selon l'une quelconque des revendications 1 à 3, dans lequel ledit mélange comporte un cristal liquide smectique de composition :

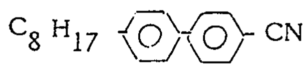

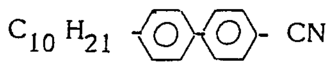

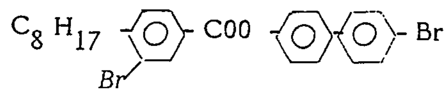

ledit agent dopant étant du bicyclooctène-2 dosé à plus de 10 %.

**Claims**

1. A display device comprising a liquid cristal layer (1) containing a mixture of biphenyls of the type presenting a smectic phase and a nematic phase, said layer being subjected to a mixed thermal and electric writing effect through heating means, permitting the transition of the smectic phase to the isotropic phase, and addressing means by an electric field, characterized in that at least one dopant constituted by bicycloocten-2 is incorporated to said liquid cristal (1) according to a rate permitting the suppression of the nematic phase during the smectic-isotropical transition and permitting further the addressing by the electric field.

2. A display device according to claim 1, in which the heating means are constituted by heating strips (4) which have successively flowing therethrough a heating current and that the addressing means by the electric field are constituted on the one hand by the heating strips (4) and on the other hand by an electrode array (5), the liquid cristal layer (1) being interposed between said strips and said electrodes.

3. A display device according to claim 1, in which the heating means are constituted by a laser beam scanning said layer, and that the addressing means by an electric field are formed by two electrodes enclosing said layer.

4. A display device according to any one of claims 1 to 3, in which said mixture comprises a smectic liquid cristal of the following composition :

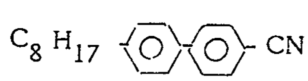

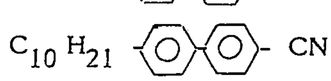

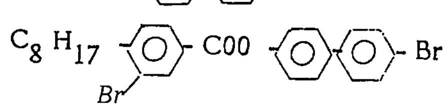

said doping agent being bicycloocten-2 in a proportion higher than 10 %.

**Patentansprüche**

1. Anzeigevorrichtung mit einer Schicht (1) eines Flüssigkristalls bestehend aus einer Mischung von solchen Biphenylen, die eine smektische und eine nematische Phase besitzen, wobei die Schicht einem gemischt thermischen und elektrischen Einschreibeffekt über Heizmittel, die den Übergang von der smektischen zur isotropen Phase ermöglichen, und über Adressiermittel durch ein elektrisches Feld ausgesetzt ist, dadurch gekennzeichnet, daß mindestens ein Dotiermittel bestehend aus Bicycloocten-2 in den Flüssigkristall (1) gemäß solchen Proportionen inkoporiert ist, daß die Unterdrückung der nematischen Phase beim Übergang vom smektischen zum isotropen Zustand und zugleich eine Adressierung mithilfe eines elektrischen Felds möglich wird.

2. Anzeigevorrichtung nach Anspruch 1, in der die Heizmittel aus Heizbändern (4) bestehen, die nacheinander von einem Heizstrom durchquert werden, und daß die Adressiermittel mithilfe eines elektrischen Felds einerseits aus den Heizbändern (4) und andererseits aus einem Netz von Elektroden (5) bestehen, wobei die Flüssigkristallschicht (1) zwischen den Bändern und den Elektroden liegt.

3. Anzeigevorrichtung nach Anspruch 1, in der die Heizmittel von einem Laserstrahl gebildet werden, der die Schicht abtastet, und daß die Adressiermittel aufgrund des elektrischen Felds von zwei Elektroden gebildet werden, die diese Schicht zwischen sich einschließen.

4. Anzeigevorrichtung nach einem beliebigen der Ansprüche 1 bis 3, in der die Mischung einen smektischen Flüssigkristall der folgenden Zusammensetzung aufweist :

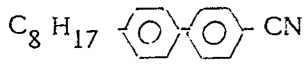

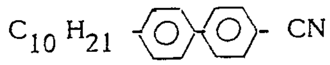

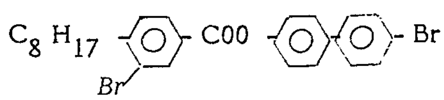

wobei das Dotiermittel Bicycloocten-2 mit einem Dotiergrad von mindestens 10 % ist.

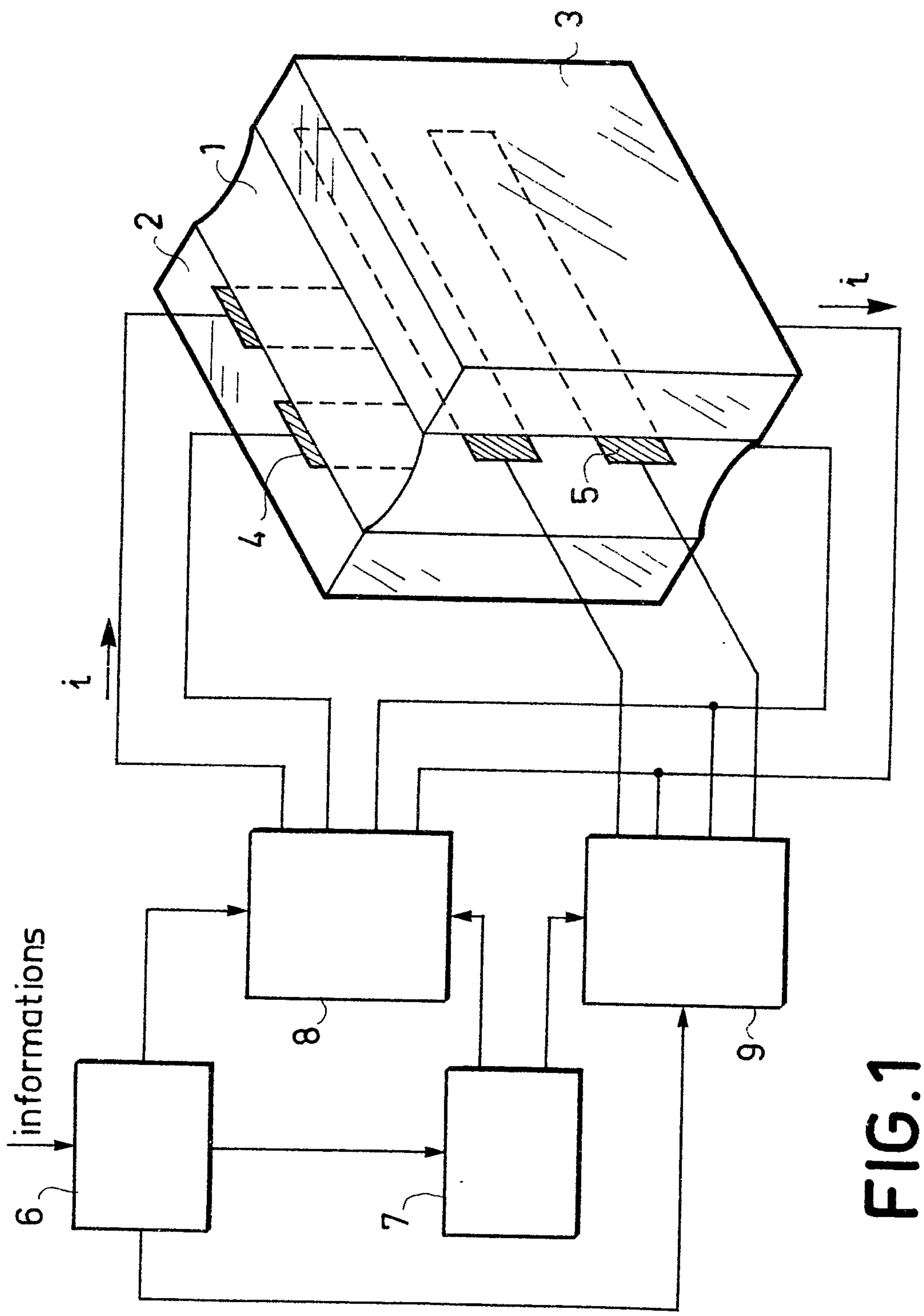


FIG.1

FIG. 2

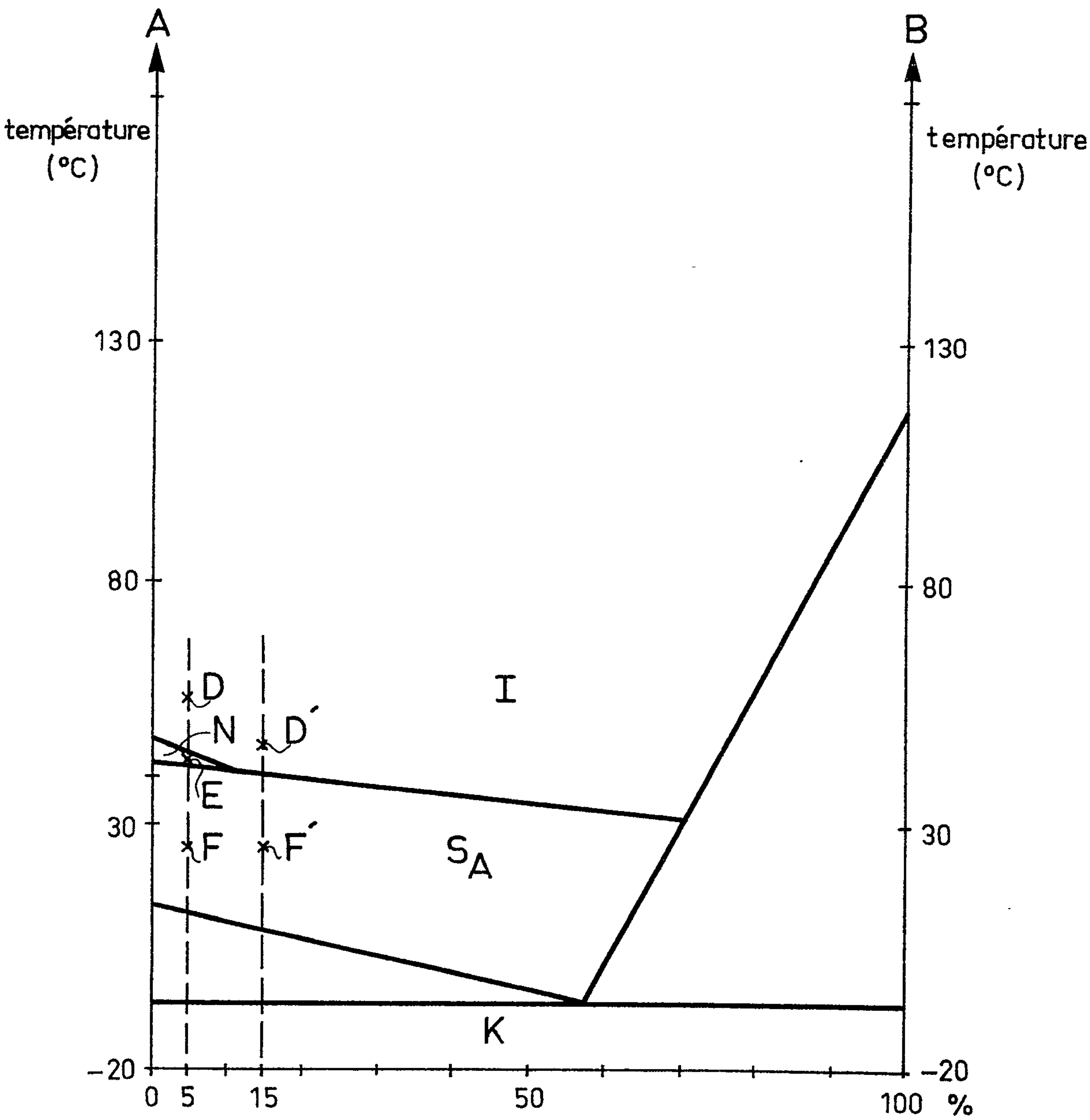
A
B
température (°C)
température (°C)
130
80
30
-20
130
80
30
-20
D
N
D´
E
F
F´
I
$S_A$
K
0
5
15
50
100 %

FIG. 3

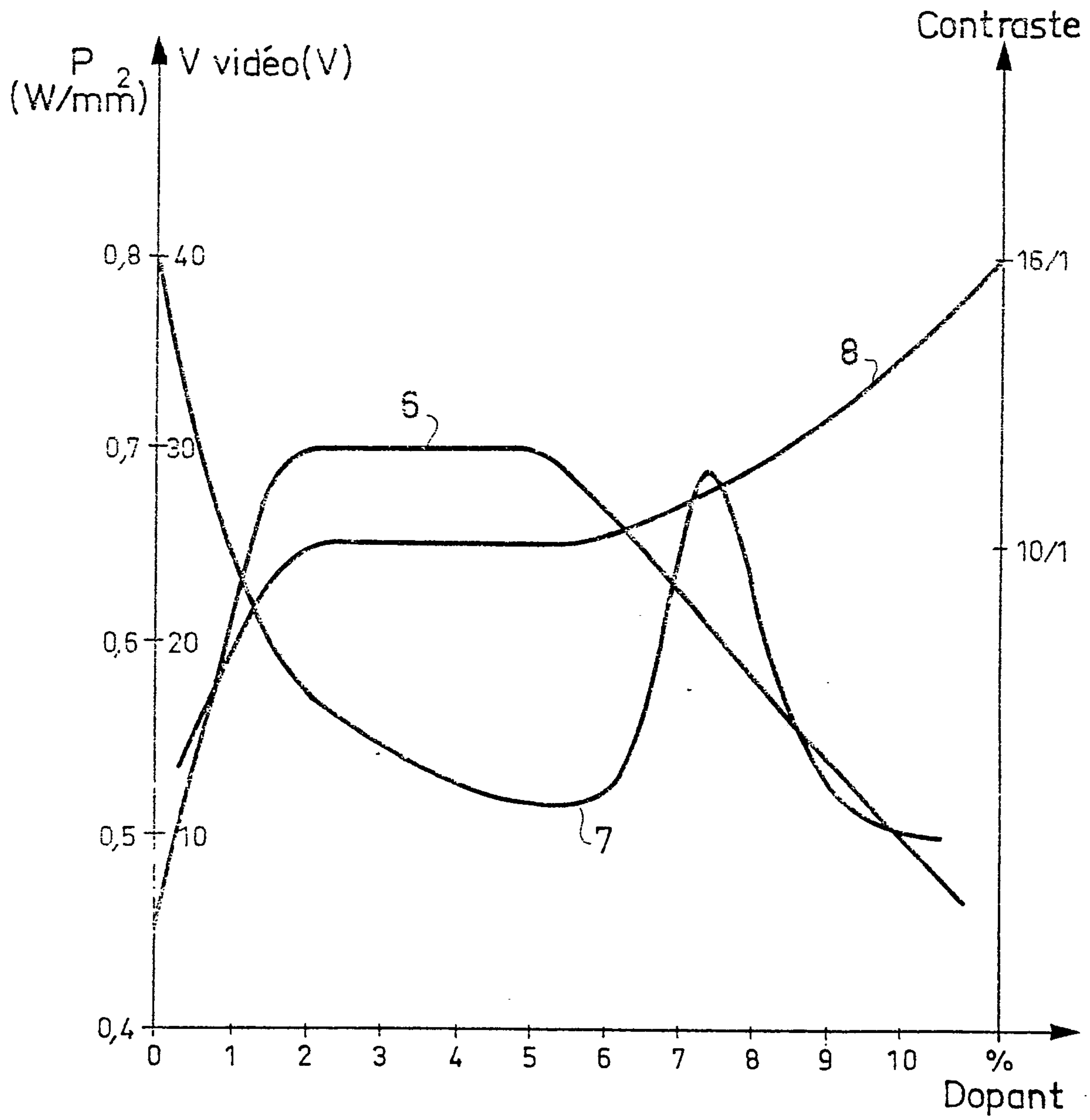
P (W/mm2)
V vidéo(V)
Contraste
0,8
40
0,7
30
0,6
20
0,5
10
0,4
16/1
10/1
6
7
8
0
1
2
3
4
5
6
7
8
9
10
%
Dopant